# EUROPEAN PATENT APPLICATION

(11) **EP 4 730 547 A1**
(43) Date of publication of application: **22.04.2026**
(21) Application number: 24843262.7
(22) Date of filing: 14.05.2024
(51) Int. Cl.: H01M 50/528, H01M 50/531, H01M 50/188

(54) **BATTERY CELL**

(30) Priority: 14.07.2023 KR 20230091944
(71) Applicant: SK On Co., Ltd., Seoul 03161 (KR)
(72) Inventor: SHIN, Jae-Sik, Daejeon 34124 (KR); BYUN, Jae-Gyu, Daejeon 34124 (KR); JU, Seung-Hoon, Daejeon 34124 (KR); SEO, Gi-Jeong, Daejeon 34124 (KR)
(74) Representative: Stolmár & Partner Patentanwälte PartG mbB
(86) International application number: PCT/KR2024/006593
(87) International publication number: WO 2025/018539

(57) **Abstract**

Provided is a battery cell comprising: a case forming an internal space; an electrode assembly including a plurality of electrode plates and a plurality of separators, and accommodated in the inner space; a current collector electrically connected to the plurality of electrode plates; a cap plate coupled to at least one side of the case; an electrode terminal installed on the cap plate; and a connector electrically connecting the electrode terminal and the current collector, wherein the current collector and the connector are in surface contact with each other by means of a plurality of protrusions provided on at least one of the current collector and the connector.

## Description

### Technical Field

The present disclosure relates to a rechargeable secondary battery cell.

### Background Art

Recently, demand for a rechargeable battery cell as an energy source has been rapidly increasing.

A rechargeable battery cell refers to a battery capable of repeated charging and discharging due to reversible conversion between chemical energy and electrical energy.

A rechargeable battery cell may include an electrode assembly in which a positive electrode plate, a negative electrode plate, and a separator interposed between the positive electrode plate and the negative electrode plate are repeatedly stacked, a case housing the electrode assembly, and a cap plate assembly covering the case. The cap plate assembly may include a cap plate covering the case, and an electrode terminal electrically connected to the electrode assembly. A plurality of electrode tabs of the electrode assembly may be electrically connected to a current collector, and the current collector may be electrically connected to the cap plate assembly.

### Disclosure of Invention

### Technical Problem

In battery cells by conventional technology, a current collector and a plurality of electrode tabs may be coupled by welding, and the current collector and a cap plate assembly may be coupled by welding. Therefore, conventional battery cells require numerous welding processes, increasing a likelihood of welding defects. Specifically, conventional technology requires welding the current collector and the cap plate assembly to establish an electrical connection between an electrode assembly and an electrode terminal. However, since a connector between the current collector and the cap plate assembly should be welded while the electrode assembly is housed in a case, the welding process may not be only difficult but also increases the likelihood of welding defects.

According to an aspect of the present disclosure, a battery cell facilitating electrical connection between a current collector and an electrode terminal may be provided.

Furthermore, according to an aspect of the present disclosure, a battery cell increasing a contact area between a current collector and a connector may be provided.

A battery cell of the present disclosure may be widely applied in green technology fields such as electric vehicles, battery charging stations, and other battery-powered solar and wind power generation, or the like. Furthermore, the battery cell of the present disclosure may be used in eco-friendly electric vehicles, hybrid vehicles, or the like, to prevent climate change by suppressing air pollution and greenhouse gas emissions.

### Solution to Problem

A battery cell according to the present disclosure includes a case forming an internal space; an electrode assembly including a plurality of electrode plates and a plurality of separators, and accommodated in the internal space; a current collector electrically connected to the plurality of electrode plates; a cap plate coupled to at least one side of the case; an electrode terminal installed on the cap plate; and a connector electrically connecting the electrode terminal and the current collector, wherein the current collector and the connector may be in surface contact with each other through a plurality of protrusions provided on at least one of the current collector or the connector.

In embodiments, a first surface of the current collector may be in surface contact with a second surface of the connector, and the plurality of protrusions may be provided on one of the first surface or the second surface.

In embodiments, the first surface or the second surface may include a plurality of coupling holes or a plurality of coupling grooves, contacting the plurality of protrusions.

In embodiments, the plurality of protrusions may be in surface contact with the plurality of coupling holes or the plurality of coupling grooves.

In embodiments, the plurality of protrusions may be engaged with the plurality of coupling holes or the plurality of coupling grooves.

In embodiments, the plurality of protrusions may have a slope narrowing in a direction of coupling to the plurality of coupling holes or the plurality of coupling holes.

In embodiments, the connector and the current collector may be in surface contact in a state pressed by an elastic force.

In embodiments, the connector may include an inner connecting member contacting the current collector, and an elastic connecting member elastically pressing the inner connecting member toward the current collector. In addition, the connector may further include a terminal connecting member connected to the electrode terminal, and the elastic connecting member may be disposed between the terminal connecting member and the inner connecting member.

In embodiments, at least a portion of the connector may be disposed in a state penetrating a through-hole formed in the cap plate, and at least a portion of the elastic connecting member may be disposed in the through-hole.

In embodiments, the elastic connecting member may include at least one coil spring or at least one leaf spring.

In embodiments, the inner connecting member may include a body contacting the elastic connecting member, and a contact member connected to the body and in surface contact with the current collector, wherein a cross-sectional area of the contact member may be greater than a cross-sectional area of the body.

In embodiments, a contact area between the contact member and the current collector may be greater than the cross-sectional area of the body.

In embodiments, the current collector may be welded to a plurality of electrode tabs extending from the plurality of electrode plates, and the current collector and the connector may be in close contact with each other by an elastic pressure.

In embodiments, at least a portion of the connector may be fixedly inserted into a through-hole formed in the cap plate.

A battery cell according to an embodiment of the present disclosure may further include an insulating member disposed on at least one of both side surfaces of the cap plate for electrical insulation of the cap plate; and a sealing member sealing between the cap plate and the connector in the through-hole, wherein the connector may penetrate the cap plate, the insulating member, and the sealing member, to be electrically connected to the current collector.

A battery cell according to another aspect of the present disclosure includes a case forming an internal space; an electrode assembly including a plurality of electrode plates and a plurality of separators, and accommodated in the internal space; a current collector electrically connected to the plurality of electrode plates; a cap plate coupled to at least one side of the case; an electrode terminal installed on the cap plate; and a connector electrically connecting the electrode terminal and the current collector, wherein the current collector and the connector have a plurality of uneven shapes interlocked with each other on opposing surfaces.

### Advantageous Effects of Invention

According to an embodiment of the present disclosure, electrical connection between a current collector and an electrode terminal may be easily achieved. For example, since a current collector and a connector may be electrically connected by contact, welding between the current collector and connector may be no longer necessary. Therefore, compared to conventional techniques that require welding between the current collector and connector, defects caused by welding may be reduced or minimized.

Furthermore, according to an embodiment of the present disclosure, since a current collector and a connector may be in contact through elastic pressure, stable electrical connection between the current collector and the electrode terminal may be maintained even without welding.

Furthermore, according to an embodiment of the present disclosure, the contact area between a current collector and a connector may be increased, thereby reducing electrical resistance between the current collector and the connector and facilitating current flow.

### Brief Description of Drawings

FIG. 1 is a perspective view of a battery cell according to an embodiment.
FIG. 2 is an exploded perspective view of the battery cell illustrated in FIG. 1.
FIG. 3 is a cross-sectional view of FIG. 1, taken along line I-I'.
FIG. 4 is a schematic diagram illustrating coupling structure between the cap plate assembly and the current collector, illustrated in FIG. 3.
FIG. 5 is a perspective view of an inner connecting member and a current collector according to an embodiment.
Portion (a) of FIG. 6, portion (b) of FIG. 6, portion (a) of FIG. 7, and portion (b) of FIG. 7 are cross-sectional views of FIG. 5, taken along line II-II', and illustrate various embodiments of coupling structure between a contact member and a current collector.
FIG. 8 is a perspective view illustrating another embodiment of the inner connecting member and the current collector, illustrated in FIG. 5.
FIG. 9 is a perspective view illustrating still another embodiment of the inner connecting member and the current collector, illustrated in FIG. 5.
Portion (a) of FIG. 10 and portion (b) of FIG. 10 are cross-sectional views of FIG. 9, taken along line III-III', and illustrate various embodiments of coupling structure between a contact member and a current collector.
Portion (a) of FIG. 11, portion (b) of FIG. 11, and portion (c) of FIG. 11 are cross-sectional views illustrating various embodiments of coupling structure between a contact member and a current collector.

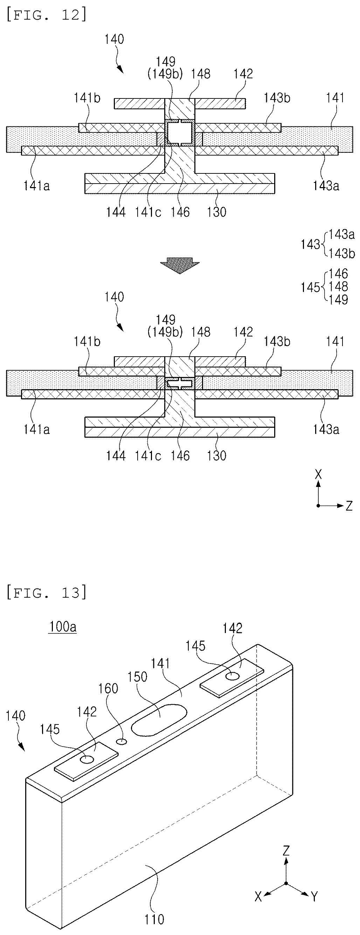

FIG. 12 is a schematic diagram illustrating coupling structure of a cap plate assembly and a current collector according to another embodiment.
FIG. 13 is a perspective view of a battery cell according to another embodiment.

### Best Mode for the Invention

Hereinafter, In the following description, the term "connected" between a component and another component may include not only cases where the components may be "directly connected" but also cases where the components may be "indirectly connected" with another component in between. Furthermore, the term "including" a component does not exclude other components unless specifically stated otherwise, but rather means that other components may be included.

Furthermore, terms including ordinal numbers, such as "first," "second," etc., used herein may be used to describe various components; however, these components is not limited by these terms, and these terms may be used solely to distinguish one component from another. For example, a first component may be referred to as a second component, and similarly, a second component may also be referred to as a first component.

Hereinafter, the present disclosure will be described in detail with reference to the attached drawings. However, these may be merely illustrative and the present disclosure is not limited to the specific embodiments illustrated herein. It should be noted that, in the attached drawings, identical components may be represented by identical reference numerals, where possible. Furthermore, detailed descriptions of well-known functions and configurations that may obscure the gist of the present disclosure will be omitted. For the same reason, some components in the attached drawings may be exaggerated, omitted, or schematically illustrated, and the sizes of each component do not fully reflect the actual size.

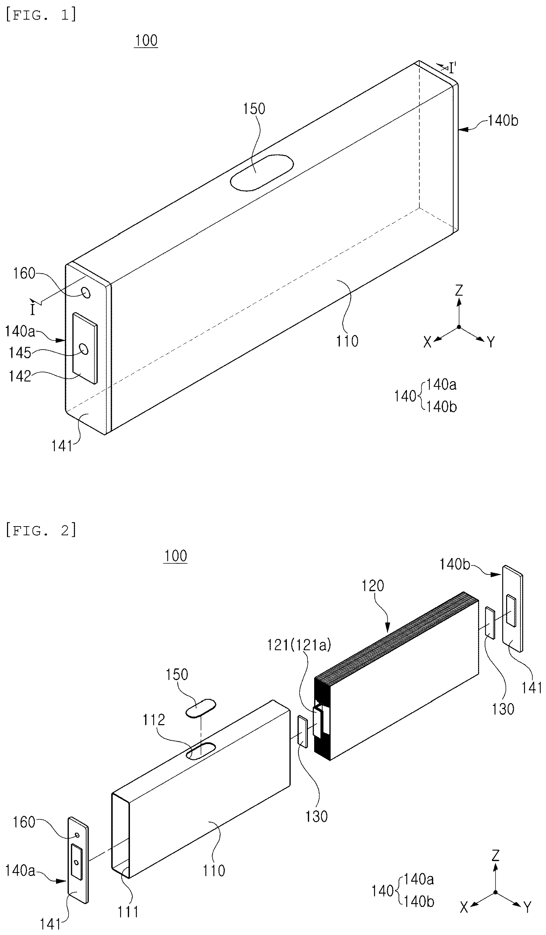

FIG. 1 is a perspective view of a battery cell (100) according to an embodiment, and FIG. 2 is an exploded perspective view of the battery cell (100) illustrated in FIG. 1.

A battery cell (100) according to an embodiment may be configured as a secondary battery. While the battery cell (100) may be described herein as a prismatic battery cell, a shape of the battery cell (100) is not limited to a hexahedral structure.

The battery cell (100) may include a case (110) and a cap plate assembly (140).

The case (110) may form the exterior of the battery cell (100), and may be formed of aluminum or a material including aluminum. However, the material of the case (110) is not limited thereto. Furthermore, in a square-shaped battery cell (100), the case (110) may be flat and may have an angular hexahedral shape. The case (110) may have an internal space, and an opening (111) may be formed on at least one side of the case (110).

The internal space of the case (110) may accommodate an electrode assembly (120) and an electrolyte. The electrode assembly (120) may include a plurality of electrode plates and a plurality of separators. The electrode plates may include a positive electrode plate and a negative electrode plate. The separator may include an insulator interposed between the negative electrode plate and the positive electrode plate. The electrode assembly (120) may be configured as a stack type in which the negative electrode plate, the positive electrode plate, and the separator are alternately stacked, or as a jelly roll type in which the stacked negative electrode plate, positive electrode plate, and separator are wound together.

The negative electrode plate and the positive electrode plate may each have a structure in which a negative electrode active material or a positive electrode active material is coated on a foil. For example, the negative electrode plate may be formed by coating graphite or the like on a foil of copper or nickel, and the positive electrode plate may be formed by coating a transition metal oxide active material on a foil of aluminum.

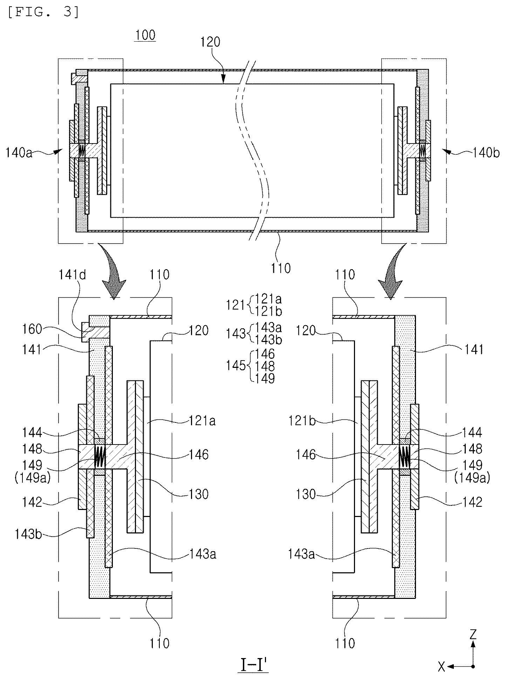

The electrode assembly (120) may include an electrode tab (121) connected to the electrode plate. The electrode tab (121) may include a negative electrode tab (121a) connected to the negative electrode plate, and a positive electrode tab (121b in FIG. 3) connected to the positive electrode plate. The negative electrode plates and positive electrode plates may include a non-coated portion in which the negative electrode active material or the positive electrode active material is not coated on the foil. The non-coated portions of the negative electrode plates may be connected to each other to form the negative electrode tab (121a), and the non-coated portions of the positive electrode plates may be connected to each other to form the positive electrode tab (121b).

The electrode tab (121) may be connected to a current collector (130). The negative electrode tab (121a) and the positive electrode tab (121b) may each be connected to a current collector (130). The current collector (130) may be electrically connected to a plurality of electrode plates through the plurality of electrode tabs (121). The current collector (130) may be coupled to the plurality of electrode tabs (121) by welding. Laser welding may be used to weld the current collector (130) and the plurality of electrode tabs (121), but a type of welding is not limited thereto.

The cap plate assembly (140) may be coupled to the opening (111) of the case (110). For example, the battery cell (100) may have a both-sides tab structure in which electrode tabs (121) are disposed on both ends of the case (110). When the battery cell (100) has a both-sides tab structure, the cap plate assembly (140) may be coupled to each of the two sides of the case (110) in a length direction (X). The cap plate assembly (140) may include a first cap plate assembly (140a) coupled to the opening (111) at one side of the case (110) in the length direction (X), and a second cap plate assembly (140b) coupled to the opening (111) at the other side in the length direction (X). In the present specification, a description will be given of a battery cell (100) having a both-sides tab structure in which the cap plate assemblies (140) are coupled to each of the two sides of the case (110) in the length direction (X), but a structure of the cap plate assembly (140) is not limited thereto. For example, as illustrated in FIG. 13, a battery cell (100a) may also include a cap plate assembly (140).

The cap plate assembly (140) may include a cap plate (141) covering the opening (111), an electrode terminal (142) installed on an outer surface of the cap plate (141), and a connector (145) electrically connecting the electrode terminal (142) to the electrode tab (121).

A venting portion (150) may be coupled to the case (110). The venting portion (150) may be coupled to a coupling hole (112) formed in the case (110). The venting portion (150) may also be coupled to the cap plate (141). The venting portion (150) may close the coupling hole (112), and may be fixed to the case (110) by welding. The venting portion (150) may be configured to discharge gases generated in the case (110). For example, the venting portion (150) may be configured to rupture when the internal pressure of the case (110) increases due to gases, etc. An installation location and the number of venting portions (150) may be changed.

The cap plate (141) may be equipped with a plug (160) closing an electrolyte injection port (141d in FIG. 3) after the electrolyte may be injected into the internal space of the case (110).

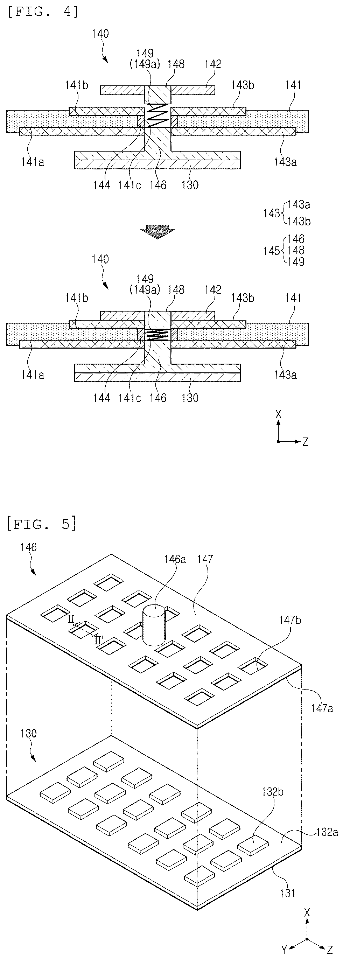

FIG. 3 is a cross-sectional view of FIG. 1, taken along line I-I', and FIG. 4 is a schematic diagram illustrating coupling structure of the cap plate assembly (140) and the current collector (130), illustrated in FIG. 3.

Referring to FIGS. 3 and 4, the battery cell (100) may have a structure in which an electrode assembly (120) is accommodated in the internal space of the case (110), and the cap plate assembly (140) is coupled to both sides of the case (110). The cap plate assembly (140) may be electrically connected to the electrode plates of the electrode assembly (120).

When the battery cell (100) has a both-sides tab structure, the electrode assembly (120) may have electrode tabs (121) disposed on both sides in the length direction (X). The negative electrode tab (121a) may be located on one side of the electrode assembly (120) in the length direction (X), and the positive electrode tab (121b) may be located on the other side of the electrode assembly (120) in the length direction (X).

The positive electrode tab (121b) and the negative electrode tab (121a) may each be electrically connected to a current collector (130). The current collector (130) may be secured to the positive electrode tab (121b) and the negative electrode tab (121a) by laser welding or the like. A shape, a structure, and welding connection of the current collector (130) and the electrode tab (121) may be known in various forms, and therefore, a detailed description thereof will be omitted.

The cap plate assembly (140) may include the first cap plate assembly (140a) coupled to one side of the case (110) in the length direction (X), and the second cap plate assembly (140b) coupled to the other side in the length direction (X).

The first cap plate assembly (140a) may be electrically connected to the negative electrode tab (121a), and the second cap plate assembly (140b) may be electrically connected to the positive electrode tab (121b). Among components of the first and second cap plate assemblies (140a, 140b), components made of conductive materials may be charged as the negative electrode or the positive electrode. The first cap plate assembly (140a) may include charged components as the negative electrode, and the second cap plate assembly (140b) may include charged components as the positive electrode.

The cap plate assembly (140) may include the cap plate (141), the electrode terminal (142), and the connector (145). Furthermore, the cap plate assembly (140) may additionally include an insulating member (143) and a sealing member (144).

The cap plate (141) may be coupled to at least one side of the case (110). The cap plate (141) may be a component of the cap plate assembly (140) that may be directly coupled to the case (110). The cap plate (141) may be welded to the case (110) while covering the opening (111 in FIG. 2) of the case (110). Laser welding may be performed along the edges of the cap plate (141) to couple the cap plate (141) and the case (110).

An electrolyte injection port (141d) may be formed in the cap plate (141) injecting the electrolyte into the internal space of the case (110). The electrolyte injection port (141d) may be sealed with the plug (160), after the electrolyte is injected. The plug (160) may have a structure that may be detachable from the cap plate (141) or may be fixed by welding after being assembled to the cap plate (141).

The electrode terminal (142) may be disposed on an outer portion of the cap plate (141) to be exposed to the outside of the cap plate (141). The electrode terminal (142) may have a plate shape, but is not limited thereto. The electrode terminal (142) may supply electricity to the electrode assembly (120) disposed inside the case (110) or receive electricity from the electrode assembly (120) and transmit the same to the outside. The electrode terminal (142) may be electrically connected to the negative electrode tab (121a) or the positive electrode tab (121b), and may be charged to the negative or positive electrode. The electrode terminal (142) may be formed of a conductive material. For example, the electrode terminal (142) connected to the positive electrode tab (121b) may be formed of aluminum or a material including aluminum, and the electrode terminal (142) connected to the negative electrode tab (121a) may be formed of copper or a material including copper. A material of the electrode tab (121) is not limited thereto.

The connector (145) may connect the electrode terminal (142) and the electrode tab (121). The connector (145) may be formed of an electrically conductive material. The connector (145) may be electrically connected to the electrode tab (121) through the current collector (130) coupled to the electrode tab (121). At least a portion of the connector (145) may pass through a through-hole (141c) formed in the cap plate (141).

The connector (145) may include an inner connecting member (146) connected to the current collector (130), and a terminal connecting member (148) connected to the electrode terminal (142). The inner connecting member (146) may be disposed in a direction toward the electrode assembly (120) to contact the current collector (130). Among inner connecting members (146), a portion contacting the current collector (130) may have a shape and cross-sectional area corresponding to the current collector (130). Although the electrode terminal (142) and the terminal connecting member (148) are illustrated as having separate structures in this specification, the electrode terminal (142) and the terminal connecting member (148) may also be formed integrally.

The connector (145) and the current collector (130) may be in surface contact while being pressed by elastic force. To this end, the connector (145) may include an elastic connecting member (149) providing elastic force. The elastic connecting member (149) may elastically press the inner connecting member (146) contacting the current collector (130) toward the current collector (130). The elastic connecting member (149) may be disposed between the terminal connecting member (148) and the inner connecting member (146). The connector (145) and the current collector (130) may be tightly connected by elastic pressure of the elastic connecting member (149). Therefore, even when the connector (145) and the current collector (130) is not welded, the connector (145) and the current collector (130) may be in stable contact, and stable electrical connection between the connector (145) and the current collector (130) is possible. The elastic connecting member (149) may include at least one coil spring (149a). The elastic connecting member (149) may be modified in various forms as long as it may provide elastic force. For example, the elastic connecting member (149) may also include at least one leaf spring (149b in FIG. 12).

The insulating member (143) may be disposed on at least one of the two sides of the cap plate (141) to electrically insulate the cap plate (141). The insulating member (143) may perform electrical insulation at least one of between the cap plate (141) and the connector (145), between the cap plate (141) and the electrode terminal (142), or between the cap plate (141) and the current collector (130) or the electrode assembly (120).

The insulating member (143) may include a first insulating member (143a) that electrically insulates between the inner connecting member (146) of the connector (145) and an inner side surface of the cap plate (141), and a second insulating member (143b) that electrically insulates between an outer side surface of the cap plate (141) and the electrode terminal (142). The first insulating member (143a) may be installed in a mounting groove (141a) formed on the inner side surface of the cap plate (141), and the second insulating member (143b) may be installed in a mounting groove (141b) formed on the outer side surface of the cap plate (141).

It is also possible that the second insulating member (143b) is not disposed in one of the first cap plate assembly (140a) or the second cap plate assembly (140b). In this case, the electrode terminal (142) and the case (110) may be charged as the positive electrode or the negative electrode. For example, when the second insulating member (143b) is not disposed in the second cap plate assembly (140b) to which the positive electrode tab (121b) is connected, the electrode terminal (142) may be charged as the positive electrode.

The cap plate assembly (140) may include the sealing member (144) installed inside the through-hole (141c). The sealing member (144) may seal between the cap plate (141) and the connector (145) inside the through-hole (141c). The sealing member (144) may prevent the electrolyte contained in the internal space of the case (110) or gas generated in the case (110) from being discharged to the outside through the cap plate assembly (140). The sealing member (144) may have a shape surrounding at least a portion of the connector (145). At least a portion of the connector (145) may be installed to penetrate the interior of the sealing member (144).

The sealing member (144) may be formed of a material having elastic and insulating properties. The sealing member (144) may electrically insulate the cap plate (141) and the connector (145) in the through-hole (141c). In FIGS. 3 and 4, the sealing member (144) may be depicted as having a shape disposed between the first insulating member (143a) and the second insulating member (143b) in the through-hole (141c), but the shape of the sealing member (144) may be changed. In addition, the sealing member (144) may be provided separately from the first insulating member (143a) and the second insulating member (143b), but may also be formed integrally with the first insulating member (143a) or the second insulating member (143b).

The connector (145) may be electrically connected to the current collector (130) by penetrating the cap plate (141), the insulating member (143), and the sealing member (144). When the electrode terminal (142) and the terminal connecting member (148) have separate structures, the terminal connecting member (148) of the connector (145) may have a structure that penetrates the electrode terminal (142).

The cap plate assembly (140) may be formed by assembling the connector (145) while disposing the sealing member (144) and the insulating member (143) on the cap plate (141). At least a portion of the connector (145) may be assembled to the cap plate (141) or the like by passing through the through-hole (141c). The inner connecting member (146) of the connector (145) may be inserted into the through-hole (141c) on the inner side surface of the cap plate (141). The terminal connecting member (148) may be inserted into the through-hole (141c) on the outer side surface of the cap plate (141). In this case, the elastic connecting member (149) may be disposed in the through-hole (141c).

The inner connecting member (146) of the connector (145) may be disposed between the cap plate (141) and the current collector (130). When the cap plate (141) is coupled to the case (110), the inner connecting member (146) of the connector (145) may be supported by the current collector (130) welded to the electrode tab (121). When the terminal connecting member (148) is pushed into the through-hole (141c) while the elastic connecting member (149) is disposed in the through-hole (141c), the elastic connecting member (149) may be compressed. Accordingly, elastic force of the elastic connecting member (149) may be transmitted to the inner connecting member (146), and the inner connecting member (146) may provide an elastic pressure to the current collector (130). The inner connecting member (146) and the current collector (130) may be in close contact by the elastic pressure of the elastic connecting member (149).

At least a portion of the connector (145) may be fixedly inserted into the through-hole (141c). For example, the terminal connecting member (148) may remain fixed to the cap plate (141) such that the elastic force of the elastic connecting member (149) may be transmitted to the inner connecting member (146). The terminal connecting member (148) may be fixed to the electrode terminal (142) or formed integrally with the electrode terminal (142). The electrode terminal (142) may be fixed to the cap plate (141) through the terminal connecting member (148).

The terminal connecting member (148) may be forcefully inserted into the through-hole (141c). A method of securing the terminal connecting member (148) to the cap plate assembly (140) is not limited thereto. For example, the terminal connecting member (148) may be secured in the through-hole (141c) by any known connecting method, such as riveting, screwing, welding, or force-fitting, or a combination thereof. The inner connecting member (146) may be disposed movably in the through-hole (141c) due to the elastic force of the elastic connecting member (149).

The electrode assembly (120) may maintain a fixed position in the case (110) without moving due to the elastic pressure exerted by the elastic connecting member (149). When the first cap plate assembly (140a) and the second cap plate assembly (140b) are respectively disposed at opposite ends of the length direction (X) of the electrode assembly (120), the electrode assembly (120) may maintain a constant position by the elastic pressure of the elastic connecting members (149) respectively disposed on the first cap plate assembly (140a) and the second cap plate assembly (140b). The force applied by the elastic connecting members (149) to the current collector (130) and/or the electrode assembly (120) may be set by considering the elastic coefficient, shape, number, etc. of the elastic connecting members (149).

Next, a coupling structure of an inner connecting member (146) and a current collector (130) will be described with reference to FIGS. 5 to 11.

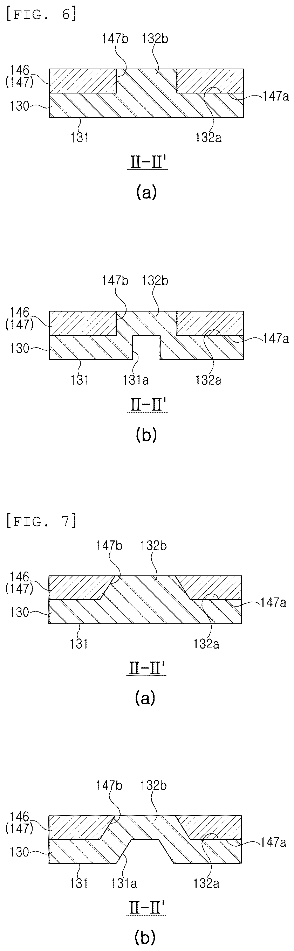

FIG. 5 is a perspective view of an inner connecting member (146) and a current collector (130) according to an embodiment, and portion (a) of FIG. 6, portion (b) of FIG. 6, portion (a) of FIG. 7, and portion (b) of FIG. 7 are cross-sectional views of FIG. 5, taken along line II-II', and illustrate various embodiments of coupling structure between a contact member (147) of an inner connecting member (146) and a current collector (130).

Referring to FIG. 5 together with FIGS. 3 and 4, an inner connecting member (146) may include a body (146a) at least a portion of which is installed in a through-hole (141c), and a contact member (147) connected to the body (146a) and contacting a current collector (130). One side of the body (146a) may be in contact with an elastic connecting member (149) installed inside the through-hole (141c), and the other side of the body (146a) may be exposed to an outside of the through-hole (141c). As an example, the body (146a) may have a cylindrical shape, but a shape of the body (146a) is not limited thereto.

The contact member (147) may be connected to the other side of the body (146a), and may be in contact with the current collector (130). The contact member (147) may be in surface contact with the current collector (130) while being pressed by elastic force of the elastic connecting member (149). Furthermore, the contact member (147) of the connector (145) and the current collector (130) may be in close contact with each other by elastic force of the elastic connecting member (149). The contact member (147) may have a shape and cross-sectional area substantially identical to those of the current collector (130).

To increase a contact area between the contact member (147) and the current collector (130), a cross-sectional area of the contact member (147) may be greater than that of the body (146a). In other words, the contact member (147) may have a shape with an enlarged cross-sectional area compared to the body (146a). Additionally, the contact area between the contact member (147) and the current collector (130) may have a value greater than a cross-sectional area of the body (146a). As such, the cross-sectional area of the contact member (147) and the contact area between the contact member (147) and the current collector (130) may increase, thereby reducing electrical resistance between the current collector (130) and the connector (145) and facilitating current flow.

The current collector (130) may be configured to be in surface contact with at least one of the connectors (145) through a plurality of protrusions provided.

The current collector (130) may have a tab connection portion (131) formed on one side to connect to an electrode tab (121 of FIG. 3) and a first surface (132a) facing the connector (145) on the other side. A first contact portion (132b) may be formed on the first surface (132a) of the current collector (130). The contact member (147) of the inner connecting member (146) may have a second surface (147a) facing the current collector (130). A second contact portion (147b) may be formed on the second surface (147a) of the inner connecting member (146). The first surface (132a) of the current collector (130) and the second surface (147a) of the connector (145) may be in surface contact.

At least one of the first contact portion (132b) or the second contact portion (147b) may include a plurality of protrusions. As an example, as illustrated in FIG. 5, portion (a) of FIG. 6, portion (b) of FIG. 6, portion (a) of FIG. 7, and portion (b) of FIG. 7, the first contact portion (132b) may include a plurality of protrusions. The second contact portion (147b) may include a plurality of coupling holes that contact the plurality of protrusions. The first contact portion (132b) and the second contact portion (147b) may be in contact with each other. To increase a contact area, the first contact portion (132b) and the second contact portion (147b) may be in surface contact with each other. When the first contact portion (132b) includes the plurality of protrusions and the second contact portion (147b) includes the plurality of coupling holes, each protrusion may be in surface contact with each coupling hole.

The current collector (130) and the connector (145) may have a plurality of interlocking uneven shapes on their opposing surfaces. That is, the first contact portion (132b) of the current collector (130) and the second contact portion (147b) of the connector (145) may have interlocking shapes. For example, the first contact portion (132b) and the second contact portion (147b) may have interlocking shapes.

Although the first contact portion (132b) and the second contact portion (147b) are illustrated as having a tetragonal shape in FIG. 5, shapes of the first contact portion (132b) and the second contact portion (147b) may be variously modified, such as polygonal, circular, or the like.

As illustrated in portion (a) of FIG. 6, portion (b) of FIG. 6, portion (a) of FIG. 7, and portion (b) of FIG. 7, the first contact portion (132b) formed on the first surface (132a) of the current collector (130) may be formed as a protrusion, and the second contact portion (147b) formed on the second surface (147a) of the contact member (147) may be formed as a coupling hole that engages with the protrusion.

As illustrated in portion (a) of FIG. 6 and portion (a) of FIG. 7, the tab connection portion (131) of the current collector (130) may be formed as a flat surface. In this case, welding between the tab connection portion (131) of the current collector (130) and the electrode tab (121) may be smoothly performed.

Conversely, as illustrated in portion (b) of FIG. 6 and portion (b) of FIG. 7, the current collector (130) may be configured to have a generally constant thickness. In the embodiments illustrated in portion (b) of FIG. 6 and portion (b) of FIG. 7, the current collector (130) may be easily manufactured by a press process. In this case, a groove (131a) may be formed in the tab connection portion (131) of the current collector (130).

As illustrated in portion (a) of FIG. 7 and portion (b) of FIG. 7, the first contact portion (132b) and the second contact portion (147b) may have inclined surfaces. That is, the first contact portion (132b), which may be formed of a protrusion, may have a slope that narrows in the direction in which it may be coupled with the second contact portion (147b), which may be formed of a coupling hole. Conversely, the second contact portion (147b), which may be formed by a coupling hole, may have a slope that increases in width toward the first contact portion (132b). Thus, sloped surfaces of the first contact portion (132b) and the second contact portion (147b) may serve as a guide when coupling the first contact portion (132b) and the second contact portion (147b). Therefore, when the sloped surfaces are formed, coupling between the contact portion (147) of the inner connecting member (146) and the current collector (130) may be facilitated.

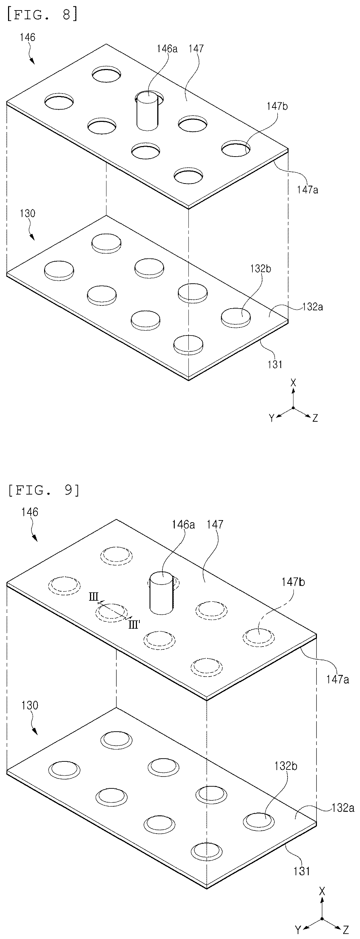

FIG. 8 is a perspective view illustrating another embodiment of the inner connecting member (146) and the current collector (130), illustrated in FIG. 5.

Referring to FIG. 8, a first contact portion (132b) of a current collector (130) may include a plurality of circular protrusions, and a second contact portion (147b) of a contact portion (147) may include a plurality of circular coupling holes. Additionally, the embodiment of FIG. 8 may have a configuration with fewer protrusions and coupling holes compared to the embodiment of FIG. 5. Thus, the first contact portion (132b) of the current collector (130) and the second contact portion (147b) of the contact member (147) may be modified to have various shapes and numbers.

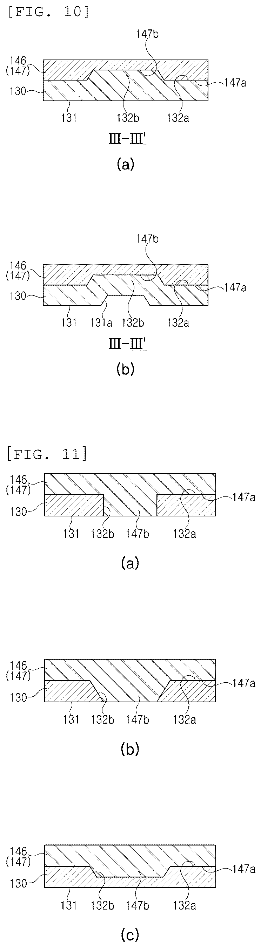

FIG. 9 is a perspective view illustrating still another embodiment of the inner connecting member (146) and the current collector (130), illustrated in FIG. 5, and portion (a) of FIG. 10 and portion (b) of FIG. 10 are cross-sectional views of FIG. 9, taken along line III-III', and illustrate various embodiments of coupling structure between a contact member 147 and a current collector 130.

The embodiments illustrated in FIGS. 5 to 8 have a configuration in which protrusions are coupled to coupling holes, while the embodiments illustrated in FIGS. 9 to portion (b) of FIG. 10 have a configuration in which protrusions are coupled to coupling grooves.

As illustrated in FIG. 9, portion (a) of FIG. 10, and portion (b) of FIG. 10, a first contact portion (132b) formed on a first surface (132a) of a current collector (130) may be formed as a protrusion, and a second contact portion (147b) formed on a second surface (147a) of a contact member (147) may be formed as a coupling groove coupling to the protrusion. When either the first contact portion (132b) or the second contact portion (147b) is formed as a coupling groove, a contact area between the first contact portion (132b) and the second contact portion (147b) may be increased compared to when either is formed as a coupling hole. As a contact area between the contact member (147) and the current collector (130) increases in this manner, electrical resistance between the current collector (130) and a connector (145) may be reduced and the current flow may be made smooth.

The first contact portion (132b) and the second contact portion (147b) may have inclined surfaces. That is, the first contact portion (132b) formed of a protrusion may have an inclined surface that narrows in a direction in which it may be coupled to the second contact portion (147b) formed of a coupling groove. Conversely, the second contact portion (147b) formed of a coupling groove may have an inclined surface that widens in the direction toward the first contact portion (132b). In this manner, the inclined surfaces of the first contact portion (132b) and the second contact portion (147b) may perform a guide function when the first contact portion (132b) and the second contact portion (147b) are coupled. Therefore, when a slope is be formed, coupling between the contact member (147) of the inner connecting member (146) and the current collector (130) may be facilitated.

As illustrated in portion (a) of FIG. 10, the tab connection portion (131) of the current collector (130) may be formed flat. In this case, welding between the electrode tab (121) and the tab connection portion (131) of the current collector (130) may be performed smoothly.

Conversely, as illustrated in portion (b) of FIG. 10, the current collector (130) may be configured to have a generally constant thickness. In the embodiment illustrated in portion (b) of FIG. 10, the current collector (130) may be easily manufactured by a press process. In this case, a groove (131a) may be formed in the tab connection portion (131) of the current collector (130).

Portion (a) of FIG. 11, portion (b) of FIG. 11, and portion (c) of FIG. 11 are cross-sectional views illustrating various embodiments of coupling structure between a contact member (146) and a current collector (130).

The embodiments of FIGS. 5 to 10 have a configuration in which the first contact portion (132b) of the current collector (130) includes a plurality of protrusions and the second contact portion (147b) of the inner connecting member (146) has a coupling hole or a coupling groove. The embodiment of FIG. 11 have a configuration in which a second contact portion (147b) of an inner connecting member (146) may include a plurality of protrusions and a first contact portion (132b) of a current collector (130) has a coupling hole or a coupling groove. In this manner, positions of the protrusions and the coupling holes or coupling grooves coupled thereto may be interchanged.

As illustrated in portions (a) and (b) of FIG. 11, a second contact portion (147b) formed on a second surface (147a) of a contact member (147) may be formed as a protrusion, and a first contact portion (132b) formed on a first surface (132a) of a current collector (130) may be formed as a coupling hole that couples to the protrusion.

As illustrated in portion (b) of FIG. 11, the first contact portion (132b) and the second contact portion (147b) may have inclined surfaces. That is, the second contact portion (147b) formed as a protrusion may have an incline that narrows in the direction in which it couples with the first contact portion (132b) formed as a coupling hole. Conversely, the first contact portion (132b) formed as a coupling hole may have an incline that widens in the direction toward the second contact portion (147b). In this manner, the inclined surfaces of the first contact portion (132b) and the second contact portion (147b) may serve as guides when coupling the first contact portion (132b) and the second contact portion (147b). Therefore, when the inclined surfaces may be formed, coupling between the contact member (147) of the inner connecting member (146) and the current collector (130) may be facilitated.

As illustrated in (c) of FIG. 11, the first contact portion (132b) and the second contact portion (147b) may have inclined surfaces. The second contact portion (147b), which may be formed of a protrusion, may have an incline that narrows in the direction in which it couples with the first contact portion (132b), which may be formed of a coupling groove. Conversely, the first contact portion (132b), which may be formed of a coupling groove, may have an incline that widens in the direction toward the second contact portion (147b). In this manner, the inclined surfaces of the first contact portion (132b) and the second contact portion (147b) may serve as guides when coupling the first contact portion (132b) and the second contact portion (147b). Therefore, when the inclined surfaces may be formed, the coupling between the contact portion (147) of the inner connecting member (146) and the current collector (130) may be facilitated.

FIG. 12 is a schematic diagram illustrating coupling structure of a cap plate assembly (140) and a current collector (130) according to another embodiment.

While the embodiment illustrated in FIG. 5 has a configuration in which the elastic connecting member (149) may include at least one coil spring (149a), the embodiment illustrated in FIG. 12 has a configuration in which an elastic connecting member (149) includes at least one plate spring (149b).

When the elastic connecting member (149) includes at least one plate spring (149b), a contact area between the elastic connecting member (149) and a terminal connecting member (148), and between the elastic connecting member (149) and an inner connecting member (146) may increase compared to the coil spring (149a), thereby facilitating smooth current flow.

FIG. 12 illustrates the plate spring (149b) as having a roughly rectangular cross-section. A cross-sectional shape of the plate spring (149b) may also be a diamond, oval, or other shape to facilitate deformation when pressurized.

FIG. 13 is a perspective view of a battery cell (100a) according to another embodiment.

A battery cell (100a) illustrated in FIG. 13 may have a configuration in which a cap plate assembly (140) is installed on one side of a case (110). In this case, a plurality of electrode terminals (142) may be disposed on a cap plate (141). Each of the plurality of electrode terminals (142) may be electrically connected to an electrode tab (121 of FIG. 3) of an electrode assembly (120) through a connector (145). Each of the plurality of electrode terminals (142) may be charged positively and negatively. The cap plate (141) may be provided with a plug (160) for sealing an electrolyte injection port (141d of FIG. 3) and a venting portion (150) for discharging gas in the case (110) to an outside of the case (110).

A configuration of the cap plate assembly (140) described with reference to FIGS. 1 to 12 may also be applied to the embodiment of FIG. 13.

While the embodiments have been described in detail above, the scope of the present disclosure is not limited thereto. It will be apparent to those skilled in the art that various modifications and variations is possible without departing from the technical spirit of the present disclosure as defined in the claims.

For example, some components of the above-described embodiments may be omitted, and the embodiments may be combined with each other.

### [Description of Reference Characters]

- 100: Battery cell
- 110: Case
- 120: Electrode Assembly
- 121: Electrode Tab
- 130: Current Collector
- 132a: First Surface
- 132b: First Contact Portion
- 140: Cap Plate Assembly
- 140a: First Cap Plate Assembly
- 140b: Second Cap Plate Assembly
- 141: Cap Plate
- 142: Electrode Terminal
- 143: Insulating Member
- 144: Sealing Member
- 145: Connector
- 146: Inner Connecting Member
- 146a: Body
- 147: Contact Member
- 147a: Second Surface
- 147b: Second Contact Portion
- 148: Terminal Connecting Member
- 149: Elastic Connecting Member
- 149a: Coil Spring
- 149b: Leaf Spring
- 150: Venting Member
- 160: Plug

## Claims

1. A battery cell comprising:
a case forming an internal space;
an electrode assembly including a plurality of electrode plates and a plurality of separators, and accommodated in the internal space;
a current collector electrically connected to the plurality of electrode plates;
a cap plate coupled to at least one side of the case;
an electrode terminal installed on the cap plate; and
a connector electrically connecting the electrode terminal and the current collector,
wherein the current collector and the connector are in surface contact with each other through a plurality of protrusions provided on at least one of the current collector or the connector.

2. The battery cell of claim 1, wherein a first surface of the current collector is in surface contact with a second surface of the connector, and
the plurality of protrusions are provided on one of the first surface or the second surface.

3. The battery cell of claim 2, wherein the first surface or the second surface includes a plurality of coupling holes or a plurality of coupling grooves, contacting the plurality of protrusions.

4. The battery cell of claim 3, wherein the plurality of protrusions are in surface contact with the plurality of coupling holes or the plurality of coupling grooves.

5. The battery cell of claim 3, wherein the plurality of protrusions are engaged with the plurality of coupling holes or the plurality of coupling grooves.

6. The battery cell of claim 3, wherein the plurality of protrusions have a slope narrowing in a direction of coupling to the plurality of coupling holes or the plurality of coupling holes.

7. The battery cell of claim 1, wherein the connector and the current collector are in surface contact in a state pressed by an elastic force.

8. The battery cell of claim 7, wherein the connector includes an inner connecting member contacting the current collector, and an elastic connecting member elastically pressing the inner connecting member toward the current collector.

9. The battery cell of claim 8, wherein the connector further includes a terminal connecting member connected to the electrode terminal, and
the elastic connecting member is disposed between the terminal connecting member and the inner connecting member.

10. The battery cell of claim 8, wherein at least a portion of the connector is disposed in a state penetrating a through-hole formed in the cap plate, and
at least a portion of the elastic connecting member is disposed in the through-hole.

11. The battery cell of claim 8, wherein the elastic connecting member includes at least one coil spring or at least one leaf spring.

12. The battery cell of claim 8, wherein the inner connecting member includes a body contacting the elastic connecting member, and a contact member connected to the body and in surface contact with the current collector,
wherein a cross-sectional area of the contact member is greater than a cross-sectional area of the body.

13. The battery cell of claim 12, wherein a contact area between the contact member and the current collector is greater than the cross-sectional area of the body.

14. The battery cell of claim 7, wherein the current collector is welded to a plurality of electrode tabs extending from the plurality of electrode plates, and
the current collector and the connector are in close contact with each other by an elastic pressure.

15. The battery cell of claim 1, wherein at least a portion of the connector is fixedly inserted into a through-hole formed in the cap plate.

16. The battery cell of claim 15, further including:
an insulating member disposed on at least one of both side surfaces of the cap plate for electrical insulation of the cap plate; and
a sealing member sealing between the cap plate and the connector in the through-hole,
wherein the connector penetrates the cap plate, the insulating member, and the sealing member, to be electrically connected to the current collector.

17. A battery cell comprising:
a case forming an internal space;
an electrode assembly including a plurality of electrode plates and a plurality of separators, and accommodated in the internal space;
a current collector electrically connected to the plurality of electrode plates;
a cap plate coupled to at least one side of the case;
an electrode terminal installed on the cap plate; and
a connector electrically connecting the electrode terminal and the current collector,
wherein the current collector and the connector have a plurality of uneven shapes interlocked with each other on opposing surfaces.
